# EUROPÄISCHE PATENTSCHRIFT

(11) **EP 0 810 912 B1**
(45) Veröffentlichungstag und Bekanntmachung des Hinweises auf die Patenterteilung: **21.10.1998**
(21) Anmeldenummer: 96902921.4
(22) Anmeldetag: 25.01.1996
(51) Int. Cl.: B23K 9/127, G01N 21/88

(54) **OPTISCHE PRÜFEINRICHTUNG ZUR ONLINE-BEWERTUNG VON SCHWEISS- ODER LÖTNÄHTEN**
OPTICAL INSPECTION DEVICE FOR ON-LINE INSPECTION OF WELD OR SOLDERED SEAMS
DISPOSITIF OPTIQUE DE CONTROLE EN LIGNE POUR CORDONS DE SOUDURE OU DE BRASURE

(30) Priorität: 21.02.1995 DE 19505832
(43) Veröffentlichungstag der Anmeldung: 10.12.1997
(73) Patentinhaber: Thyssen Stahl Aktiengesellschaft, 47166 Duisburg (DE); VITRONIC Dr.-Ing. Stein Bildverarbeitungs GmbH, 65189 Wiesbaden (DE)
(72) Erfinder: FRINGS, Adam, D-45470 Mülheim (DE); LÜBECK, Peter-Michael, 57439 Attendorn (DE); STEIN, Norbert, D-65189 Wiesbaden (DE)
(74) Vertreter: Knauf, Rudolf, Dipl.-Ing.
(86) Internationale Anmeldenummer: EP9600301
(87) Internationale Veröffentlichungsnummer: WO9626033

(56) Entgegenhaltungen:
- DE-A- 4 312 241
- ROBOTICS, CIM AND AUTOMATION, EMERGING TECHNOLOGIES, SAN DIEGO, NOV. 9 - 13, 1992, Bd. 2 OF 3, 9.November 1992, INSTITUTE OF ELECTRICAL AND ELECTRONICS ENGINEERS, Seiten 966-970, XP000356765 YOSHITO SAMEDA: "FUZZY SEAM-TRACKING CONTROLLER"
- BÄNDER,BLECHE,ROHRE, Bd. 29, Nr. 7, 1988, WÜRZBURG,DE, Seiten 32-35, XP002004563
- PATENT ABSTRACTS OF JAPAN vol. 009, no. 279 (M-427), 7.November 1985 & JP,A,60 121072 (HITACHI ZOSEN KK), 28.Juni 1985,

## Beschreibung

Im Zuge einer Gewichts- und Festigkeitsoptimierung von Bauteilen werden die Bauteile nach der örtlichen Belastung dimensioniert. Vor allem in der Automobilindustrie ist man dazu übergegangen, einzelne Bauteile unterschiedlich stark zu dimensionieren, zum Beispiel Knautschzonen schwächer als die Fahrgastzelle zu dimensionieren. Um diesen Forderungen zu genügen, werden Bauteile aus unterschiedlich dimensionierten Teilen eingesetzt, die über eine Naht, insbesondere Schweißnaht, miteinander verbunden sind. Damit solche Bauteile im Betrieb ihre Funktion erfüllen können, kommt es entscheidend auf die Qualität der Schweißnaht an.

Die übliche Methode der Überprüfung einer Schweißnaht besteht in der optischen Kontrolle durch eine geübte Person. Es versteht sich von selbst, daß auf diese Art und Weise eine objektive Kontrolle nach gleichen Maßstäben nicht gewährleistet werden kann. Bei durchaus üblichen hohen Bearbeitungsgeschwindigkeiten von zum Beispiel 12 m/min. eines eine Prüfstation durchlaufenden Bauteils ist eine optische Fehlerkennung durch eine Person überhaupt nicht mehr möglich. Hinzu kommt, daß es oft schwierig ist, einen wirklichen Fehler von einem scheinbaren Fehler mit dem Auge zu erkennen. Dies kann auch am unterschiedlichen Reflexionsverhalten der Oberfläche der Bauteile liegen, die mit und ohne metallische Überzüge sowie Beschichtungen versehen sein können. Auch Oberflächenverschmutzung und Anlauffärbung im Bereich der Schweißnaht machen die Unterscheidung von tatsächlichen und nur scheinbaren Fehlern schwer.

Bei einem gerade bekanntgewordenen Verfahren zur Nahtvermessung zur Anwendung in einem Nahtverfolgungssystem (DE 43 12 241 A1) wird die Oberfläche eines Werkstückes im Bereich der Naht beleuchtet und von einem flächenhaften Bildaufnehmer erfaßt, um eine Graubildauswertung vorzunehmen. Außerdem wird intermittierend nach dem Lichtschnittverfahren die Naht erfaßt. Dabei erfolgt die Graubildauswertung zwischen den Projektionsphasen nach dem Lichtschnittverfahren. Bei diesem Verfahren geht es um die Lage der Naht auf der Oberfläche und nicht darum, die Qualität der Naht zu bewerten.

Der Erfindung liegt die Aufgabe zugrunde, eine Prüfeinrichtung für Schweiß- oder Lötnähte miteinander verbundener Teile zu schaffen, die auch bei hohen Durchsatzleistungen Fehler identifiziert und analysiert.

Diese Aufgabe wird mit einer Prüfeinrichtung gelöst, die folgende Merkmale aufweist:
a) Die miteinander verbundenen Teile werden mittels einer Führungseinheit auf einem vorgegebenen Abstand von einer Sensoreinheit gehalten.
b) Eine Nahtsucheinheit mit einem optischen Sensor, in dessen Meßfeld die Naht liegt, und mit einer dem Sensor nachgeschalteten Auswerteeinheit liefert eine Information über die Lage der Naht.
c) In Abhängigkeit von der Information über die Lage der Naht wird ein optischer 2d-Sensor, dessen Meßfeld auf die Breite der Naht abgestimmt ist, durch ein Stellglied so positioniert, daß dessen Meßfeldmitte und die Nahtmitte übereinstimmen.
d) In Abhängigkeit von mit dem 2d-Sensor festgestellten zweidimensionalen Fehlern wird eine Fehlererkennungseinheit aktiviert, die die Fehlstelle analysiert.

Diese erfindungsgemäße Prüfeinrichtung bringt die für die geometrische und qualitative Bewertung der Naht maßgeblichen Elemente in eine optimale Meßposition, so daß Oberflächenfehler und die Breite der Naht auch bei hohen Durchsatzleistungen gut zu identifizieren sind. Das Analyseergebnis läßt sich zur Anzeige bringen und aufzeichnen, zum Beispiel in Form eines Protokolls für den geprüften Gegenstand, aber auch zur Steuerung des Schweiß- oder Lötverfahrens benutzen.

Für die Analyse der Fehlstelle hat sich vor allem das bekannte Lichtschnittverfahren (DE-Z: Kontrolle 1991, September, Seiten 5-14) bewährt. Wenn es jedoch nur um die Bestimmung der flächenmäßigen Ausdehnung des erkannten Fehlers geht, kann es ausreichen, statt der Erfassung der Naht nach dem Lichtschnittverfahren für einen geeigneten Sensor mit einer geeigneten Zusatzbeleuchtung die Naht erkennbar zu machen.

Da die Qualität einer Naht zum Beispiel auch davon abhängt, ob ein Nahteinfall oder eine Nahtüberhöhung vorliegt, ist nach einer Ausgestaltung der Erfindung vorgesehen, die Nahtgeometrie mit Hilfe eines 3d-Nahtprofilsensors zu bestimmen. Dieser 3d-Nahtprofilsensor arbeitet nach dem Lichtschnittverfahren und beruht auf dem Prinzip der Lichtstrahltriangulation.

Um für die exakte optische Erfassung der Naht die optimale Lage zu haben, ist nach einer ersten Ausgestaltung der Erfindung vorgesehen, daß in Abhängigkeit von der von der Nahtsucheinheit mit dem optischen Sensor und der nachgeschalteten Auswerteeinheit gelieferten Information über die Lage der Naht ein optischer 3d-Nahtprofilsensor durch das Stellglied so positioniert wird, daß Nahtmitte und Meßfeldmitte übereinstimmen. Dabei ist vorzugsweise jeweils ein optischer 3d-Nahtprofilsensor auf beiden Seiten der miteinander verbundenen Teile angeordnet.

Für die exakte optische Erfassung der Nahtbreite ist es notwendig, zwischen Naht, Schmauch-Niederschlag und Anlauffarben der metallischen Oberflächen zu unterscheiden. Um diese Störgrößen auszuschalten, dient nach einer Ausgestaltung der Erfindung zur Beleuchtung der Naht eine strukturierte Flächenbeleuchtung insbesondere mit Infrarotlicht.

In der Regel genügt es für die optische Prüfung einer Schweiß- oder Lötnaht nicht, sie nur von einer Seite der miteinander verbundenen Teile zu prüfen. Deshalb sind nach einer weiteren Ausgestaltung der Erfindung auf beiden Seiten der miteinander verbundenen Teile jeweils ein optischer Sensor und eine Fehlererkennungseinheit vorgesehen.

Im folgenden wird die Erfindung anhand einer ein Ausführungsbeispiel darstellenden Zeichnung näher erläutert. Im einzelnen zeigen:
- Fig. 1: eine Prüfeinrichtung ohne Auswerteeinheit für eine Schweißnaht aus der Sicht in Verlaufrichtung der Schweißnaht,
- Fig. 2: die Prüfeinrichtung gemäß Figur 1 ohne Auswerte- und Führungseinheit in schematischer Darstellung aus der Sicht quer zum Schweißnahtverlauf,
- Fig. 3: eine schematische Darstellung des Meßprinzips der Lichtstrahltriangulation,
- Fig. 4: eine schematische Darstellung des angewendeten Lichtschnittverfahrens in Verbindung mit der Lichtstrahltriangulation,
- Fig. 5a: ein Bild einer Schweißnaht, das von einem 2d-Sensor geliefert wird,
**und**
- Fig. 5b: das Bild einer Fehlerstelle, das eine Fehlererkennungseinheit liefert und analysiert.

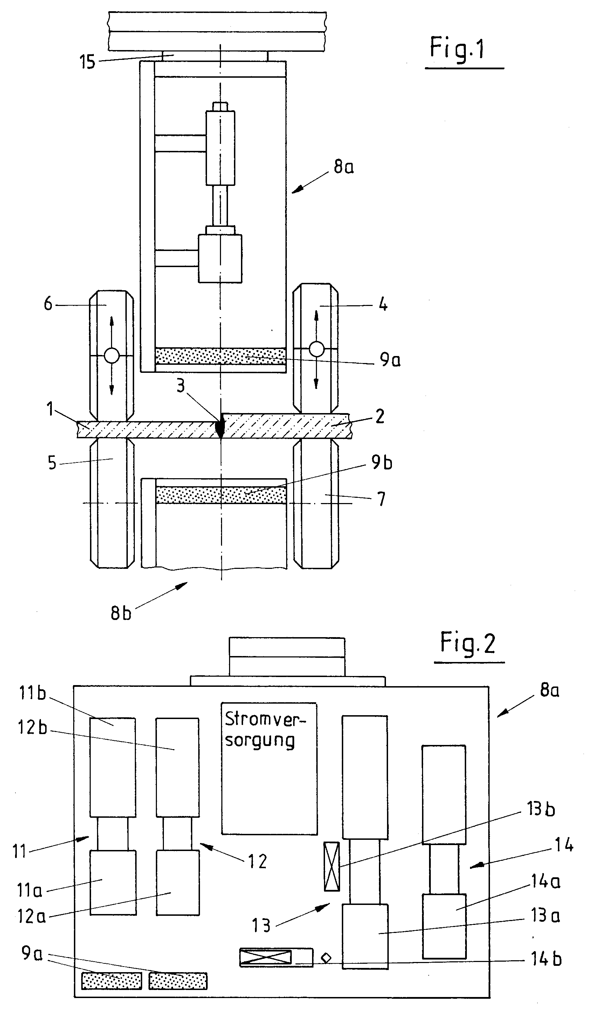

Gemäß Figur 1 ist ein Bauteil, das aus zwei verschieden dicken Blechen 1,2, die über eine Schweißnaht 3 miteinander verbunden sind, zwischen Rollen 4,5,6,7 einer Führungseinheit positioniert. Das Bauteil 1,2 kann somit in Richtung der Schweißnaht 3 bewegt werden. In starrer räumlicher Beziehung zu den Rollen 4 bis 7 ist eine Prüfeinrichtung angeordnet, die eine obere Sensoreinheit 8a und eine untere Sensoreinheit 8b umfaßt. Die Schweißnaht 3 und die angrenzenden Bereiche werden von einer strukturierten Flächenbeleuchtung 9a,9b, insbesondere einer Infrarotbeleuchtung, beleuchtet. Die Beleuchtung 9a,9b wird bezüglich ihres Einfallswinkels, ihrer Wellenlänge und dergleichen so ausgewählt, daß Störgrößen, wie Schmutz, Reflexionen und dergleichen weitgehend für das aufzunehmende Bild möglichst unterdrückt werden.

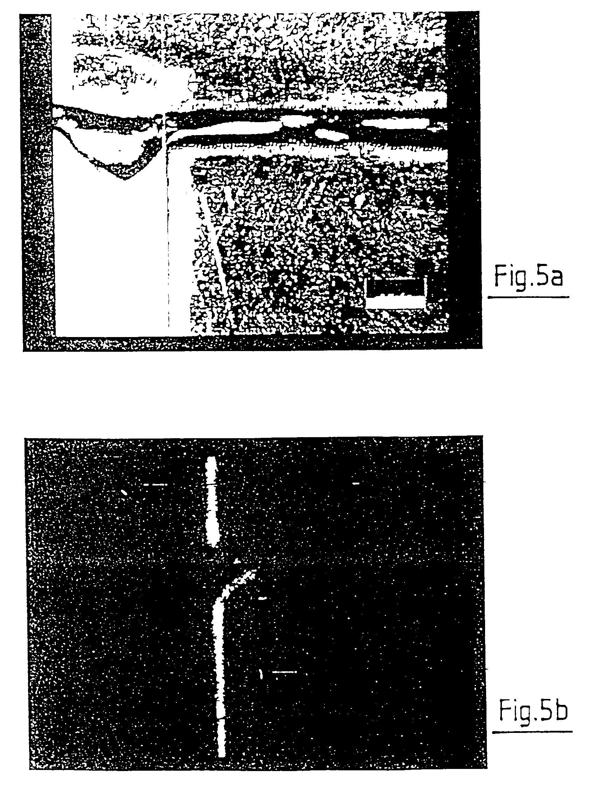

Wie Figur 2 zeigt, weist die obere Prüfeinrichtung mehrere in Verlaufrichtung der Schweißnaht 3 hintereinander angeordnete Einheiten 11,12,13,14 auf. Zuerst wird die Schweißnaht 3 von einer Nahtsucheinheit 11 mit einem optischen Sensor 11a erfaßt. Da die Lage der Schweißnaht 3 auch seitlich versetzt zur in Figur 1 dargestellten Mitte liegen kann, ist es erforderlich, daß die Nahtsucheinheit 11 mit ihrem Sensor 11a den gesamten Bereich der möglichen Lage der Naht 3 erfaßt. Mittels einer nachgeschalteten, aber nicht dargestellten Auswerteeinheit wird dann analysiert, wo die Naht 3 liegt. Die Auswerteeinheit liefert ein Stellsignal an ein Stellglied 15. Entsprechend dem Stellsignal verstellt das Stellglied 15 die Sensoreinheit 8a bis 8b quer zum Verlauf der Schweißnaht 3 derart, daß der optische 2d-Sensor 12a und die damit in einer Reihe liegenden Sensoren 13a,14a der nachfolgenden Einheiten 13,14 mittig zu dieser Schweißnaht 3 liegen. Der 2d-Sensor 12a liefert nun Bilder, wie in Figur 5a dargestellt. Die Auswerteeinheit des 2d-Sensors 12a analysiert diese Bilder bezüglich wirklicher und scheinbarer Fehler und bezüglich der Nahtbreite. Bei diesen Informationen über die Fehler läßt sich aber noch nicht zwischen tatsächlichen und scheinbaren Fehlern unterscheiden.

Um scheinbare und tatsächliche Fehler unterscheiden zu können, ist die dem 2d-Sensor 12 nachgeordnete Einheit 13 als Fehlererkennungseinheit ausgebildet. Die Fehlererkennungseinheit 13 arbeitet nach dem Lichtschnittverfahren und weist dafür einen optischen Sensor 13a, insbesondere eine CCD-Matrix-Kamera, und einen Lichtstreifenprojektor 13b und eine nicht dargestellte Auswerteeinheit auf. Das vom optischen Sensor 13a aufgenommene Bild ist in Figur 5b dargestellt.

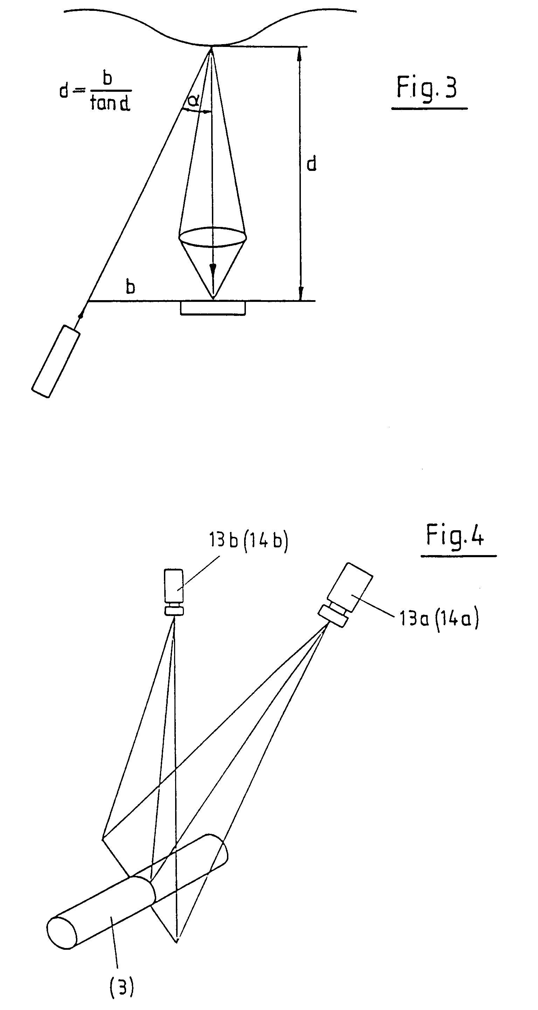

Mit der so weit beschriebenen Sensoreinheit 8a ist es also möglich, die Nahtbreite und tatsächliche Fehler zu erfassen. Da diese Informationen in vielen Fällen nicht ausreichen, um die Qualität einer Schweißnaht zu beurteilen, ist der Fehlererkennungseinheit 13 die schon erwähnte weitere Einheit 14 als 3d-Nahtprofilsensor 14 mit einer Laserdiode 14a und einer CCD-Matrix-Kamera 14b nachgeordnet. Der 3d-Nahtprofilsensor 14a arbeitet nach dem Lichtschnittverfahren in Verbindung mit der Lichtstrahltriangulation. Das Prinzip dieser Arbeitsweise ist in Figur 3 und 4 dargestellt.

Da die optische Beurteilung der Qualität einer Schweißnaht 3 von nur einer Seite unzureichend ist, ist bei dem Ausführungsbeispiel der Erfindung vorgesehen, daß beide Seiten der Schweißnaht 3 geprüft werden. Dafür brauchen aber nicht alle die für eine Seite beschriebenen Einheiten vorgesehen zu sein. Es genügen ein weiterer 2d-Sensor, eine weitere Fehlererkennungseinheit und ein weiterer 3d-Nahtprofilsensor, da die Informationen der Nahtsucheinheit für die Einstellung der Sensoreinheiten beider Seiten benutzt werden kann.

Die besonderen Vorteile der erfindungsgemäßen Prüfeinrichtung bestehen darin, daß mit ihr zerstörungsfrei und online die Qualität einer Schweiß- oder Lötnaht hinsichtlich Fehler in der Naht, hinsichtlich der Nahtbreite und hinsichtlich des Nahtprofils bestimmt werden. Die dabei ermittelten Ergebnisse lassen sich protokollieren und/oder zur Steuerung des Schweiß- beziehungsweise Lötprozesses sowie der Fertigungsanlage verwerten. Es ist einsetzbar für verschiedene Arten von Schweiß- und/oder Lötnähten an unterschiedlichen metallischen Werkstoffen ohne und mit metallischen Überzügen, auch in Mischbauweise, und bei nach verschiedenen Verfahren hergestellten Schweiß- und Lötnähten. Es läßt sich einsetzen sowohl bei stationären als auch bewegten Bauteilen. Besonders vorteilhaft ist der Einsatz der Prüfeinrichtung in Verbindung mit einer Schweiß- oder Löteinheit. Wird die Sensoreinheit an den Bearbeitungskopf gekoppelt, wird sie automatisch längs der Schweißnaht geführt. In diesem Fall braucht über die Nahtsucheinheit nur die exakte Lage der Naht zum Einstellen der eigentlichen Sensoreinheit ermittelt zu werden.

## Patentansprüche

1. Prüfeinrichtung für Schweiß- oder Lötnähte miteinander verbundener Teile, insbesondere Bleche, mit folgenden Merkmalen:
a) Die miteinander verbundenen Teile (1,2) werden mittels einer Führungseinheit (4,5,6,7) auf einem vorgegebenen Abstand zu einer Sensoreinheit (8a,8b) gehalten.
b) Eine Nahtsucheinheit (11) mit einem optischen Sensor (11a), in dessen Meßfeld die Naht (3) liegt, und mit einer dem Sensor (11a) nachgeschalteten Auswerteeinheit, liefert eine Information über die Lage der Naht (3).
c) In Abhängigkeit von der Information über die Lage der Naht (3) wird ein optischer 2d-Sensor (12), dessen Meßfeld auf die Breite der Naht (3) abgestimmt ist, durch ein Stellglied (15) so positioniert, daß Nahtmitte und Meßfeldmitte übereinstimmen.
d) In Abhängigkeit von mit dem 2d-Sensor (12) festgestellten zweidimensionalen Fehlern wird eine Fehlererkennungseinheit (13) aktiviert, die die Fehlerstelle analysiert.

2. Prüfeinrichtung nach Anspruch 1,
**dadurch gekennzeichnet,** daß in Abhängigkeit von der Nahtsucheinheit (11) mit dem optischen Sensor (11a) und der nachgeschalteten Auswerteeinheit gelieferten Information über die Lage der Naht (3) ein optischer 3d-Nahtprofilsensor (14) durch das Stellglied (15) so positioniert wird, daß Nahtmitte und Meßfeldmitte übereinstimmen.

3. Prüfeinrichtung nach Anspruch 2,
**dadurch gekennzeichnet,** daß der optische 3d-Nahtprofilsensor (14) nach dem Lichtschnittverfahren in Verbindung mit der Lichtstrahltriangulation arbeitet.

4. Prüfeinrichtung nach Anspruch 1 oder 2,
**dadurch gekennzeichnet,** daß zur Beleuchtung der Naht (3) eine strukturierte Flächenbeleuchtung (9a,9b) dient.

5. Prüfeinrichtung nach Anspruch 1,
**dadurch gekennzeichnet,** daß auf beiden Seiten der miteinander verbundenen Teile (1,2) jeweils ein optischer 2d-Sensor (12) und eine Fehlererkennungseinheit (13) vorgesehen sind.

6. Prüfeinrichtung nach Anspruch 2,
**dadurch gekennzeichnet,** daß jeweils ein optischer 3d-Nahtprofilsensor (14) auf beiden Seiten der miteinander verbundenen Teile (1,2) angeordnet ist.

## Claims

1. A testing device for welding or soldering joints of parts, more particularly metal sheets, connected to one another, having the following features:
a) The parts (1,2) connected to one another are retained at a given distance from a sensor unit (8a, 8b) by means of a guide unit (4, 5, 6, 7).
b) Information concerning the position of the joint (3) is supplied by a joint-seeking unit (11) having an optical sensor in whose measuring field the joint (3) lies, and an evaluating unit connected to the sensor (11a).
c) In dependence on the information concerning the position of the joint (3), an optical bidimensional sensor (12) whose measuring field is adapted to the width of the joint (3) is so positioned by an adjusting member (15) that the centre of the joint and the centre of the measuring field register, and
d) in dependence on the bidimensional faults detected by the bidimensional sensor (12), a fault-detecting unit (13) is activated which analyzes the location of the fault.

2. A testing device according to claim 1, characterized in that in dependence on information concerning the position of the joint (3) supplied by the joint-seeking unit (11) with the optical sensor (11a) and the connected evaluating unit, an optical threedimensional joint profile sensor (14) is so positioned by the adjusting member (15) that the centre of the joint and the centre of the measuring field register.

3. A testing device according to claim 1, characterized in that the optical threedimensional joint profile sensor (14) operates by the light-section procedure in conjunction with light beam triangulation.

4. A testing device according to claims 1 or 2, characterized in that a structured area lighting (9a, 9b) is used to illuminate the joint (3).

5. A testing device according to claim 1, characterized in that an optical bidimensional sensor (12) and a fault-detecting unit (13) are provided on each of the two sides of the parts (1,2) connected to one another.

6. A testing device according to claim 2, characterized in that an optical threedimensional joint profile sensor (14) is disposed on each of the sides of the parts (1,2) connected to one another.

## Revendications

1. Dispositif de contrôle pour des cordons de soudure ou de brasure de pièces raccordées l'une à l'autre, notamment des tôles, comprenant les caractéristiques suivantes :
a) Les pièces (1, 2) raccordées l'une à l'autre sont maintenues au moyen d'une unité de guidage (4, 5, 6, 7) à une distance prédéterminée par rapport à une unité de capteurs (8a, 8b).
b) Une unité de recherche de cordon (11) comprenant un capteur optique (11a) dans le champ de mesure duquel se trouve le cordon (3), et une unité d'exploitation raccordée en aval du capteur (11a), délivre une information sur la position du cordon (3).
c) En fonction de l'information sur la position du cordon (3), un capteur optique bidimensionnel (12) dont le champ de mesure est accordé à la largeur du cordon (3), est positionné par un organe de réglage (15) de sorte que le centre du cordon et le centre du champ de mesure coïncident.
d) En fonction des défauts bidimensionnels déterminés par le capteur bidimensionnel (12), une unité (13) de reconnaissance de défauts est activée et analyse l'emplacement du défaut.

2. Dispositif de contrôle selon la revendication 1, caractérisé en ce qu'en fonction de l'information sur la position du cordon (3) délivrée par l'unité de recherche (11) du cordon comprenant le capteur optique (11a) et l'unité d'exploitation raccordée en aval, un capteur optique (14) du profil tridimensionnel du cordon est positionné par l'organe de réglage (15) de telle manière que le centre du cordon et le centre du champ de mesure coïncident.

3. Dispositif de contrôle selon la revendication 2, caractérisé en ce que le capteur optique (14) du profil tridimensionnel du cordon travaille selon la méthode de la coupe optique en relation avec une triangulation de faisceaux de lumière.

4. Dispositif de contrôle selon la revendication 1 ou 2, caractérisé en ce que pour l'éclairage du cordon (3), on utilise un éclairage en surface structuré (9a, 9b).

5. Dispositif de contrôle selon la revendication 1, caractérisé en ce que sur les deux côtés des pièces (1, 2) raccordée l'une à l'autre, il est prévu respectivement un capteur optique bidimensionnel (12) et une unité (13) de reconnaissance de défauts.

6. Dispositif de contrôle selon la revendication 2, caractérisé en ce que respectivement un capteur optique (14) du profil tridimensionnel du cordon est agencé sur chaque côté des pièces (1, 2) raccordées l'une à l'autre.
